# EUROPÄISCHE PATENTANMELDUNG

(11) **EP 0 806 255 A1**
(43) Veröffentlichungstag der Anmeldung: **12.11.1997**
(21) Anmeldenummer: 97106145.2
(22) Anmeldetag: 15.04.1997
(51) Int. Cl.: B21C 37/08, B23K 13/02

(54) **Schweissvorrichtung für ein Längsnahtrohr aus Kupferlegierungen oder Aluminium**

(30) Priorität: 10.05.1996 DE 19618790
(71) Anmelder: Messingswerk Plettenberg Herfeld & Co., 58840 Plettenberg (DE)
(72) Erfinder: Bappert, Frank, 58809 Neuenrade (DE)
(74) Vertreter: Hassler, Werner, Dr.

(57) **Zusammenfassung**

Eine kontinuierliche Schweißvorrichtung für ein Längsnahtrohr (1) aus Kupferlegierungen oder Aluminium mit einer Nahtführung (5), einer Induktionsspule (4) und Schweißwalzen (6), die die aufgeschmolzene Längsnaht im Schweißbereich zusammendrücken. Das technische Problem ist eine solche Ausbildung der Schweißwalzen, daß dieselben ohne Wasserkühlung arbeiten können. Die Schweißwalzen bestehen aus Siliciumnitrid-Keramik.

## Beschreibung

Die Erfindung betrifft eine kontinuierliche Schweißvorrichtung für ein Längsnahtrohr aus Messing mit einer Nahtführung, einer Induktionsspule und Schweißwalzen, die die aufgeschmolzene Längsnaht im Schweißbereich zusammendrücken.

Nach Ruge, Handbuch der Schweißtechnik, Springer Verlag, Berlin, Heidelberg, New York 1974, S. 309-313, bes. S. 309/310 wird in einem Formwalzwerk ein Band über Walzen in mehreren Stufen zu einem in Längsrichtung noch offenen Schlitzrohr geformt. Die Schweißung des Schlitzes erfolgt durch Widerstandsschweißen mit einem hochfrequenten Wechselstrom. Dabei wird die zum Schweißen benötigte Hochfrequenzenergie dem in Längsrichtung noch nicht geschlossenen Rohr über einen Induktor zugeführt. Mit dem Induktor wird in dem Schlitzrohr eine HF-Spannung induziert, wodurch ein Strom über die Bandkanten zum Berührungspunkt der Bandkanten bzw. zum Schweißpunkt fließt und den Schweißbereich aufheizt. Das erhitzte Schlitzrohr läuft dann zwischen Schweißwalzen oder Formwalzen ein. Infolge der Feldverteilung im unmittelbaren Bereich des Induktors und der Schweißwalzen ist eine Kühlung derselben erforderlich. Eine Kühlung der Schweißwalzen bedingt auch eine erhöhte Wärmeleitung des Schlitzrohres, so daß die Güte und Qualität der Schweißung aufgrund der Kühlemulsion leidet.

Aufgabe der Erfindung ist eine solche Ausbildung der Schweißwalzen, daß dieselben ohne Wasserkühlung arbeiten können.

Diese Aufgabe wird nach der Erfindung dadurch gelöst, daß die Schweißwalzen aus Siliciumnitrid-Keramik bestehen.

Die Erfindung unterscheidet sich insofern vom Stand der Technik, als die Schweißwalzen aus dem speziellen Keramikwerkstoff infolge ihrer geringen Wärmeleitfähigkeit, ihrer hohen Eeinsatztemperatur und ihres geringem Ausdehnungskoeffizienten keine Kühlung benötigen. Außerdem werden keine Ablagerungen auf die Rohroberfläche übertragen, so daß man Rohre aus den verschiedenen Kupferlegierungen und Aluminium mit einer hohen Oberflächenqualität und Qualität der Schweißnaht erhält.

Ein Ausführungsbeispiel wird anhand der Zeichnungen erläutert, in denen darstellen:

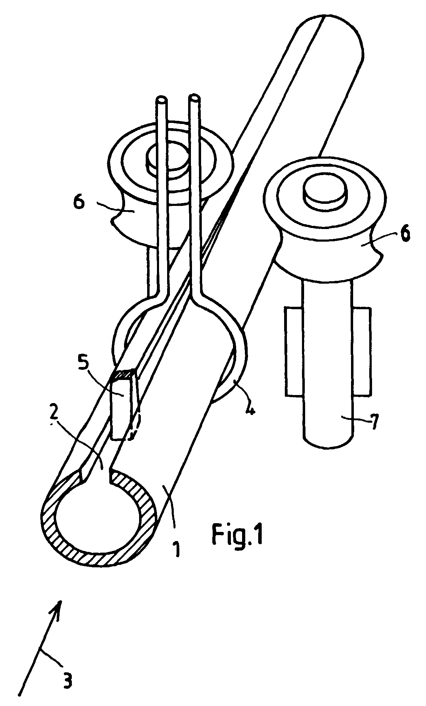

Fig. 1 eine perspektivische Ansicht der Schweißvorrichtung und

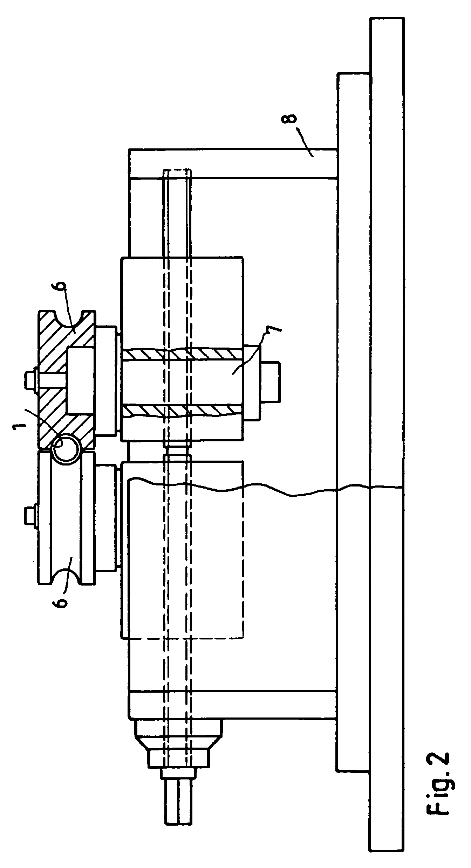

Fig. 2 einen Schnitt durch den Walzenstuhl für die Schweißwalzen.

Ein in Pfeilrichtung 3 kontinuierlich bewegtes Band wird aus einer ebenen Grundform durch nicht dargestellte Walzen in ein in einer Längsnaht 2 offenes Rohr 1 oder Schlitzrohr geformt. Zum Schweißen der Längsnaht 2 wird das Rohr 1 durch eine an einen nicht dargestellten Generator angeschlossene Induktionsspule 4 auf Schweißtemperatur erwärmt.

Eine genaue Schweißung wird durch eine Nahtführung 5 und zwei Scheißwalzen 6 garantiert, die die Längsnaht im Schweißbereich zusammenpressen, so daß sich die Kanten der Längsnaht 2 stoffschlüssig miteinander verbinden.

Die Schweißwalzen 6 sitzen auf Wellen 7, die in einem Walzenstuhl 8 geführt sind. Einzelheiten des Walzenstuhls 8 und der Wellen 7 sind nicht erläutert. Die Schweißwalzen 6 bringen das Rohr 1 in Zylinderform, so daß eine saubere Schweißnaht entsteht. Die Schweißnaht wird in bekannter Weise auf der Innenseite und auf der Außenseite entgratet, was ebenfalls nicht dargestellt ist.

Die Schweißwalzen 6 bestehen nach der Erfindung aus Siliciumnitrid-Keramik. Dieser Keramikwerkstoff hat sich als hervorragend geeignet erwiesen. Die Wärmeleitung ist so gering, daß die Schweißwalzen 6 ohne Kühlung betrieben werden können. Eine Überhitzung der Wellen 7 ist ausgeschlossen. Die Schweißwalzen 6 aus Siliciumnitrid-Keramik haben eine deutlich höhere Standzeit gegenüber Metallwalzen.

## Patentansprüche

1. Kontinuierliche Schweißvorrichtung für ein Längsnahtrohr aus Kupferlegierungen oder Aluminium mit einer Nahtführung, einer Induktionsspule und Schweißwalzen, die die aufgeschmolzene Längsnaht im Schweißbereich zusammendrücken, dadurch gekennzeichnet, daß die Schweißwalzen aus Siliciumnitrid-Keramik bestehen.
